# EUROPÄISCHE PATENTSCHRIFT

(11) **EP 0 986 912 B1**
(45) Veröffentlichungstag und Bekanntmachung des Hinweises auf die Patenterteilung: **31.10.2001**
(21) Anmeldenummer: 98921325.1
(22) Anmeldetag: 03.06.1998
(51) Int. Cl.: H04N 7/18, G08B 13/194

(54) **VERFAHREN ZUM ÜBERWACHEN EINES VORGEGEBENEN ÜBERWACHUNGSBEREICHES**
METHOD FOR SURVEYING A PREDETERMINED SURVEILLANCE AREA
PROCEDE POUR SURVEILLER UNE ZONE DE SURVEILLANCE PREDEFINIE

(30) Priorität: 04.06.1997 CH 133297; 16.02.1998 CH 36898
(43) Veröffentlichungstag der Anmeldung: 22.03.2000
(73) Patentinhaber: Ascom Systec AG, 5506 Mägenwil (CH)
(72) Erfinder: WEGMANN, Max, CH-3400 Burgdorf (CH)
(74) Vertreter: Roshardt, Werner Alfred, Dipl.-Phys.
(86) Internationale Anmeldenummer: CH9800236
(87) Internationale Veröffentlichungsnummer: WO9856182

(56) Entgegenhaltungen:
- WO-A-88/00784
- FR-A- 2 606 572
- FR-A- 2 713 806
- GB-A- 2 257 598
- US-A- 5 153 722

## Beschreibung

### Technisches Gebiet

Die Erfindung betrifft ein Verfahren zum Überwachen eines vorgegebenen Überwachungsbereiches mit Hilfe eines Detektionsgerätes, insbesondere mindestens einer Videokamera und/oder eines Mikrofons.

### Stand der Technik

Die sicherheitstechnische Überwachung von Anlagen und Räumen erfolgt einerseits mit spezifischen physikalischen Sensoren (z.B. Lichtschranken, Bewegungsdetektoren, Gassensoren) und andererseits mit Videokameras. Videokameras haben den Vorteil, dass eine Beurteilung der Situation von Ferne durch einen Bewacher durchgeführt werden kann und dass folglich auch relative komplexe Situationen, welche sich mit spezifischen physikalischen Sensoren nicht erfassen lassen, umfassend überwacht werden können.

Um die Kosten des Überwachungspersonals möglichst gering halten zu können, wird meistens eine grössere Anzahl von Kameras umschaltbar auf einige wenige gemeinsame Monitore geschaltet. Die Umschaltung kann dabei in vorgegebenen Zyklen oder selektiv (z.B. bei der Entdeckung einer Bewegung) stattfinden.

Ein Problem der Überwachung durch Videokameras besteht darin, dass der Bewacher mit der Zeit ermüdet. Die Videobilder werden mit der Zeit nur noch oberflächlich oder sporadisch betrachtet.

### Darstellung der Erfindung

Aufgabe der Erfindung ist es, ein Verfahren der eingangs genannten Art anzugeben, das die Überwachung mit Videokameras insgesamt zuverlässiger und auch effizienter macht.

Die Lösung der Aufgabe ist durch die Merkmale des Anspruchs 1 definiert. Gemäss der Erfindung werden zunächst aus einem momentanen Signalabschnitt durch eine automatische Signalanalyse charakteristische Daten ermittelt. Diese Daten werden (z.B. mit einem Zeitvermerk) als Datensatz ab- bzw. zwischengespeichert, um danach mit den Daten von anderen Datensätzen, welche bestimmte Kriterien erfüllen, statistisch verglichen zu werden.

Durch den statistischen Vergleich kann das erfindungsgemässe Überwachungssystem ausserordentliche Situationen erkennen und diese dem Bewacher selektiv zur Kenntnis bringen. Es ist dabei zu beachten, dass das System selbst erkennt, weiche Situationen ausserordentlich sind und daher näher zu prüfen sind. Es ist auch nicht erforderlich, von vornherein festzulegen, was in einer bestimmten Überwachungssituation als ausserordentlich zu gelten hat. Nach einer gewissen Anlaufzeit hat das System nämlich von selbst die Statistik einer ordentlichen Situation gesammelt. (Es stört dabei nicht, wenn bereits in der Anlaufzeit ausserordentliche Situationen auftreten, da diese aufgrund ihrer Seltenheit ohnehin keinen wesentlichen Einfluss auf die Statistik haben.)

Im Rahmen der automatischen Bildanalyse wird das Videobild vorzugsweise in mehrere Segmente (Bildbereiche) zerlegt. Die Segmente können teilweise überlappen oder vollständig disjunkt sein. Zu jedem Segment werden danach gewisse charakteristische Daten bzw. Merkmale ermittelt. Die verschiedenen Segmente können gleich oder unterschiedlich behandelt werden. Im erstgenannten Fall wird z.B. zu jedem Segment dasselbe Daten-Set ermittelt. Im zweitgenannten Fall dagegen sind die Segmente z.B. in Gruppen zusammengefasst, wobei zu verschiedenen Gruppen unterschiedliche Daten-Sets berechnet werden. Auf diese Weise ist es z.B. möglich, einen Raum zu überwachen, in dessen einem Teilbereich ständig Bewegung ist (z.B. aufgrund des Publikumverkehrs), dessen anderer Teilbereich dagegen nur von einer Person (für die Bedienung) begangen wird.

Eine einfache und wirkungsvolle Massnahme bei der Bildauswertung ist z.B. die Graustufen-Analyse. Im ausgewählten Segment wird z.B. ein Mittelwert der vorhandenen Graustufen berechnet. Es können auch Histogramme der Graustufen (oder der Farbwerte) bestimmt werden. Bei einer statistisch relevanten Abweichung des Graustufen-Mittelwertes von den entsprechenden Mittelwerten mit anderen Zeitbezügen wird das Videobild z.B. auf einen Überwachungsmonitor aufgeschaltet (bzw. ein Alarm ausgelöst).

Weiter können Daten über vorhandene Texturen, Linien und Kanten ermittelt werden. Diese können Aufschluss über die Position eines Gegenstandes oder dessen Orientierung geben. Insbesondere eignen sich Kanten zur Bestimmung einer Verschiebungsrichtung und einer Verschiebungsgeschwindigkeit. Die Geschwindigkeit und die Richtung können durch den Vergleich des momentanen Bildes mit einem oder mehreren vorangangenen berechnet werden. Es kann sich um das unmittelbar vorangegangene handeln (welches bei einer Bildfrequenz von z.B. 25 Hz um 1/25 S zurückliegt) oder um eines, das mehrere Takte zurückliegt. Wie gross der zeitliche Abstand sein soll, hängt von der erwarteten Geschwindigkeit des bewegten Objektes ab.

Es kann von Vorteil sein, die bewegten Objekte im Bild zu identifizieren (z.B. als "Person", "Fahrzeug", "unbekanntes Objekt"). Zu jedem Objekt können zulässige Parameter (Ort, Geschwindigkeit, Richtung) ermittelt werden. Auf diese Weise können beispielsweise ausserordentliche Bewegungen von ordentlichen unterschieden werden. (Ein Fahrzeug, das sich auf der Fahrbahn bewegt, und eine Person, die sich auf dem Gehsteig bewegt, sind ordentliche Ereignisse, während eine Person, die sich in einer bestimmten Richtung auf der Fahrbahn bewegt ein ausserordentliches Ereignis sein kann.)

Die Zuverlässigkeit und die Fehlalarmrate können durch eine geeignete d.h. situationsbezogene Wahl der Vergleichszeitpunkte wesentlich verbessert werden. Es mag zwar in gewissen Überwachungssituationen genügen, wenn der statistische Vergleich einfach auf einen vergangenen, nachlaufenden Zeitraum (z.B. die letzten dreißig Minuten) bezogen wird. In komplexeren Situationen kann es dagegen wichtig sein, die Zeitbezüge selektiver festzulegen. Der statistische Vergleich kann z.B. auf ähnliche Zeitbereiche beschränkt werden (ähnliche Tageszeiten, ähnliche Wochentage). Weiter ist es möglich, die Zeitbezüge durch zusätzliche Parameter zu definieren. Es sind z.B. Überwachungssituationen denkbar, bei denen die Temperatur eine Rolle spielt. D.h. dass beim statistischen Vergleich nur solche Daten berücksichtigt werden, welche einen ähnlichen Parameterwert (z.B. eine ähnliche Temperatur) aufweisen. Ferner können auch Bedingungen berücksichtigt werden. Beispielsweise ist es möglich, dass ein Ereignis B nur dann kritisch ist, wenn es auf ein Ereignis A folgt.

Gemäss einer bevorzugten Ausführungsform werden die Videobilder in einem FIFO-Speicher abgelegt. Wird ein ausserordentlicher Zustand des Überwachungsobjektes festgestellt, dann wird ein Alarm ausgelöst. Dies führt z.B. dazu, dass der Bewacher die Kontrolle erhält und die im FIFO-Speicher enthaltenen Bildsequenzen abspielen kann. Der Bewacher beurteilt die Situation und ordnet sie einer bestimmten Kategorie zu ("gefährlich", "ungefährlich"). Dieses Ergebnis wird im System zusammen mit den Parameterwerten, welche im vorliegenden Fall zu einer Alarmierung geführt haben, abgespeichert. In späteren Situationen ist es möglich, die Beurteilung des Bewachers in die Situationsanalyse miteinzubeziehen. Die Fehlalarmrate kann auf diese Weise sukzessive optimiert werden.

In einer Anlaufphase ist es auch denkbar, das System gezielt zu trainieren. Zu diesem Zweck werden im Überwachungsbereich bestimmte Testsituationen durchgespielt (z.B. ein Einbruch). Der Bewacher markiert diejenigen Videobilder bzw. Zeitpunkte, die zu einem Alarmsignal führen müssen. Das System speichert dann die zum entsprechenden Bild gehörenden Daten bzw. Parameter ab und ermittelt deren statistische Abweichung von denjenigen einer normalen Situation.

Die Erfindung beschränkt sich nicht auf die Analyse von Bildsignalen. Von Interesse kann insbesondere auch die Auswertung von akustischen Signalen sein. Dabei wird vorzugsweise eine spektrale Analyse durchgeführt. Das Signal wird z.B. in Abschnitte einer Länge von 1 bis 10 Sekunden aufgeteilt. Jeder dieser Signalabschnitte wird beispielsweise in Blöcke einer Länge im Bereich von 20 bis 50 ms zerlegt, welche mit einer Fouriertransformation (FFT) in den Spektralbereich überführt werden.

Zur Extraktion der charakteristischen Merkmale können z.B. Frequenzbereiche vorgegeben werden, in welchen die Energieverteilung ermittelt wird. Auf diese Weise können beispielsweise Fahrgeräusche identifiziert werden. Durch die Anwendung von spezifischen Kriterien können auch Stimmengeräusche identifiziert werden. Beim Vergleich von aufeinanderfolgenden Signalabschnitten können weitere Informationen gewonnen werden (wie z.B. das regelmässige Schlagen der Räder bei den Schienenstössen). Wenn nun das erfindungsgemässe System statistisch relevante Abweichungen feststellt (z.B. plötzlicher Anstieg der Fahrgeräusche, ungewöhnliche Stimmgeräusche etc.) kann dies als Indiz für eine außergewöhnliche Situation (z.B. offene Türe bei fahrendem Zug) benutzt werden.

Im Prinzip eignet sich das erfindungsgemässe Verfahren für jede Überwachungssituation. Seine besondere Stärke zeigt sich jedoch bei komplexen Situationen. Diese sind insbesondere dort zu finden, wo ein dem Publikum (teilweise oder ganz) zugänglicher Bereich überwacht werden soll. Als Beispiel sei die Überwachung eines Geldautomaten erwähnt. Mit einem erfindungsgemässen System kann auch der Fahrgastraum eines Transportmittels (z.B. eines Zuges) dauerhaft überwacht werden.

Zu erwähnen ist auch die Überwachung von Produktionsanlagen und von einzelnen Prozessschritten. Grössere Areale (z.B. ein Kernkraftwerk) können mit mehreren Kameras überwacht werden. Die erfindungsgemässe Auswertung kann dabei die Daten mehrerer Kameras als Gesamtheit (d.h. als umfassenden Datensatz) erfassen, so dass logische Verknüpfungen zwischen den Bildern verschiedener Kameras möglich sind.

Ganz allgemein ist es von Vorteil, mehrere Detektionsgeräte unterschiedlicher Gattung zu kombinieren. Die Beurteilung einer Überwachungssituation mit Hilfe von Bild und Ton beispielsweise ist zuverlässiger als wenn nur Bild oder nur Ton vorhanden sind. Auch chemische Detektoren oder Analysegeräte können wichtige Informationen liefern. Die Auswahl und Zusammenstellung der verschiedenen Geräte- bzw. Sensortypen hängt natürlich von der konkreten Situation ab.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung einer beispielhaften Überwachurlgssituation;
- Fig. 2a, b: Zwei schematische Darstellungen von möglichen Segmentierungen;
- Fig. 3: Eine schematische Darstellung selektiv gewählter Zeitbezüge;
- Fig. 4: Eine schematische Darstellung des statistischen Vergleichs.

Grundsätzlich sind in den Figuren gleiche Teile mit gleichen Bezugszeichen versehen.

### Wege zur Ausführung der Erfindung

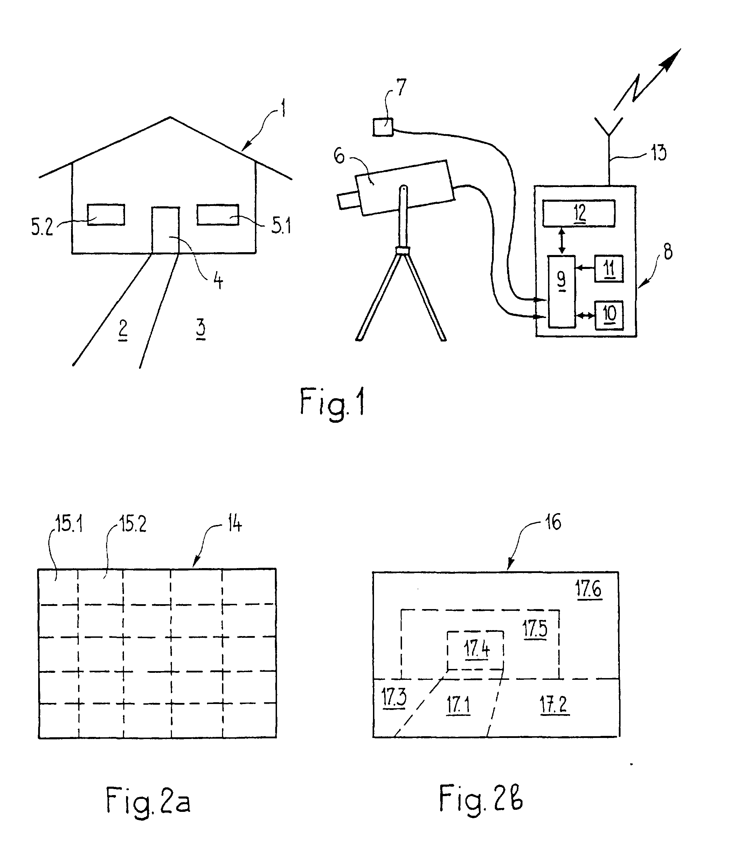

Im folgenden soll die Erfindung anhand eines konkreten Ausführungsbeispiels erläutert werden. Fig. 1 zeigt eine einfache Überwachungssituation. Ein Haus 1 ist über einen privaten Weg 2 erschlossen, welcher durch einen Garten 3 verläuft. An der Frontseite des Hauses 1 befinden sich die Haustüre 4 und zwei Fenster 5.1, 5.2.

Am Rande des Gartens 3 ist in erhöhter Position eine Videokamera 6 derart montiert, dass Haus 1, Weg 2 und Garten 3 bildlich erfasst werden. Neben der Videokamera 6 kann zusätzlich ein Sensor 7 (z.B. ein Tageslicht-Sensor) vorgesehen sein.

Videokamera 6 und Sensor 7 sind an einer Bildverarbeitungsanlage 8 angeschlossen. Diese verfügt über eine Recheneinheit 9, einen Datenspeicher 10, einen Zeitgeber 11 und einen Bildspeicher 12. Für die Datenübertragung zu einer (nicht dargestellten) Überwachungszentrale kann eine Breitbandkommunikationsverbindung (z.B. ein Funksignalsender 13) vorgesehen sein.

Das erfindungsgemässe Verfahren zur Überwachung der Frontseite des Hauses läuft wie folgt ab:

Die Videokamera 6 läuft ununterbrochen. Die aufgenommenen Videobilder werden durch die Recheneinheit 9 nach verschiedenen Kriterien automatisch analysiert. Aus dieser Analyse resultiert zu jedem Videobild ein Satz von charakteristischen Daten. Diese werden einerseits zusammen mit einem Zeitvermerk (vgl. Zeitgeber 11) in einer Datenbank (im Datenspeicher 10) abgespeichert und andererseits mit ausgewählten älteren Daten statistisch verglichen. Ergibt sich eine relevante Abweichung von der Gesamtheit der vergangenen Daten (d.h. von der durch die vergangenen Daten gebildeten Statistik), dann wird ein Alarmsignal an die Überwachungszentrale ausgesendet.

Bei Eingang des genannten Alarmsignals bei der Überwachungszentrale wird z.B. unverzüglich das laufende Videosignal der Videokamera 6 auf einem Monitor zur Anzeige gebracht. Der Bewacher kann nun sehen, was sich vor dem Haus 1 abspielt. Ist nichts besonderes zu erkennen, so kann er bei Bedarf die im Bildspeicher 12 zwischengespeicherten Bildsequenzen abrufen um sicherzustellen, dass tatsächlich nichts Ungewöhnliches vorgefallen ist. Trifft dies zu, dann wird dem System mitgeteilt, dass es sich um einen Fehlalarm gehandelt hat. Diese Information kann für die Analyse späterer Situationen herangezogen werden.

Anhand der Figuren 2a, b, 3 und 4 soll erläutert werden, wie die Analyse der Videobilder in vorteilhafter Weise durchgeführt werden kann.

Gemäss einer besonders bevorzugten Ausführungsform wird der Pixelraster 14 bzw. 16 (welcher jedem Videobild zugrunde liegt) in eine Mehrzahl von Segmenten 15.1, 15.2 ... bzw. 17.1 bis 17.6 unterteilt. In Fig. 2a sind alle Segmente etwa gleich gross, d.h. die Unterteilung entspricht einem regelmässigen Gitter. In Fig. 2b ist die Segmentierung dagegen an die konkrete Überwachungssituation angepasst. So gibt es z.B. ein Segment 17.1, welches bezüglich seiner Form an die von der Videokamera 6 erfasste Perspektive des Weges 2 angepasst ist. In ähnlicher Weise sind die Segmente 17.2, 17.3 an dem Garten 3 zu linker und zu rechter Hand des Weges 2 angepasst. Weiter sind im vorliegenden Beispiel je ein Segment 17.4, 17.5, 17.6 für die Haustüre 4, die übrige Frontseite des Hauses 1 und den Himmel vorhanden. Die Segmente 17.1 und 17.5 sind im vorliegenden Beispiel überlappend ausgebildet.

Für jedes Videobild werden z.B. die Graustufen ausgewertet. Es kann z.B. für jedes Segment 17.1 bis 17.6 ein Mittelwert für die innerhalb desselben auftretenden Graustufen ermittelt werden. Es kann z.B. auch ein gewichtetes Mittel (Moment 1. Ordnung) aus den Koordinaten der Pixel und deren Graustufe berechnet werden. Eine weitere Möglichkeit besteht darin, die statistische Verteilung der Graustufen (in Form eines Histogramms bzw. einer Verteilungsfunktion) zu erfassen.

Durch den Vergleich von mehreren, in gleichen zeitlichen Abständen aufeinanderfolgenden Videobildern können ferner bewegte Objekte identifiziert und deren Richtung und Geschwindigkeit errechnet werden.

Mit den obenerwähnten Analyseverfahren kann z.B. festgestellt werden, ob und wo sich im Bild etwas verändert. Solche Veränderungen äussern sich einerseits in einer Veränderung der Graustufen bzw. der Graustufen-Statistik und andererseits in der Erkennung eines Objektes und dessen Position, Richtung und Geschwindigkeit.

Die automatisierte Analyse ist damit aber noch nicht beendet. Gemäss der Erfindung erfolgt nun nämlich ein Vergleich der ermittelten Daten bzw. Merkmale mit denjenigen von früheren Videobildern. Die Bedeutung dieses Vergleichs soll an ein paar Beispielen vor Augen geführt werden.

Dass sich jemand auf dem Weg 2 auf das Haus 1 zu bewegt, ist für sich betrachtet noch nicht ein Grund für einen Alarm. Der Postbote wird sich nämlich jeden Tag einmal zum Haus 1 begeben. Es ist auch denkbar, dass ein fremder Hund auf das Haus 1 zurennt, was ebenfalls keine Alarmsituation darstellen dürfte.

Anders ist die Situation beispielsweise dann zu beurteilen, wenn jemand auf die Fenster 5.1, 5.2 zu geht. Diese Situation ist zweifellos als ausserordentlich zu bezeichnen und sollte folglich zu einem Alarm führen. Eine andere alarmierende Situation besteht z.B. dann, wenn sich etwas auf die Haustüre 4 zu bewegt und sich dann nicht innerhalb einer vorgegebenen Zeit entfernt. (Dies könnte bedeuten, dass jemand vor der Haustüre 4 schläft oder dass die detektierte Person die Haustüre aufgebrochen hat und in das Haus eingedrungen ist.)

Zu jedem Videobild gibt es also einen charakteristischen Datensatz. Wird eine grössere Menge von solchen Datensätzen statistisch ausgewertet, dann lassen sich Wertebereiche für ordentliche (d.h. nicht-aussergewöhnliche) Situationen definieren. Liegt nun der momentane Datensatz innerhalb des Wertebereiches, dann ist von Seiten des Systems nichts zu unternehmen. Fällt dagegen ein Datensatz aus dem statistisch ermittelten Wertebereich heraus, dann wird z.B. ein Alarmsignal ausgesendet. Es ist aber auch denkbar, dass eine Überprüfung der Situation mit Hilfe von Ergebnissen früherer Alarmsituationen durchgeführt wird, bevor effektiv ein Alarm ausgelöst wird. Diese Überprüfung kann beispielsweise eine Berechnung der Fehlalarm-Wahrscheinlichkeit beinhalten. (Zu diesem Zweck wird z.B. ermittelt, wie gross der "Abstand" des momentanen Datensatzes von der Alarmgrenze ist und wie gross die "Abstände" bei früheren Fehlalarmen waren.)

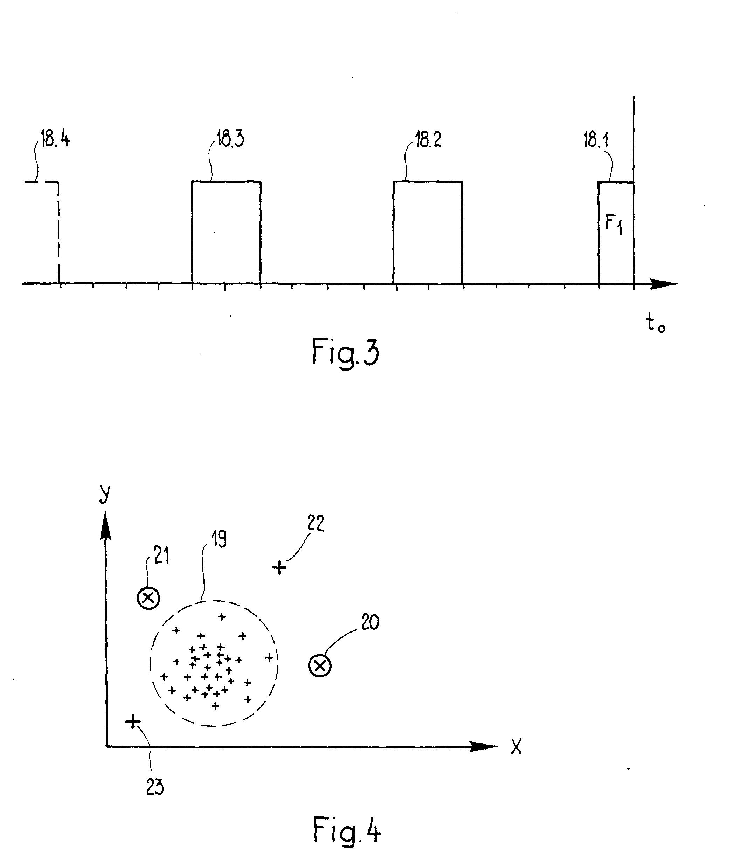

Anhand der Fig. 3 soll eine weitere Verfeinerung des erfindungsgemässen Verfahrens erläutert werden. Der aktuelle Zeitpunkt ist mit t0 bezeichnet. Auf der Zeitachse sind mehrere Zeitabschnitte 18.1 bis 18.4 definiert. Sie sind z.B. alle gleich lang und in regelmässigen Zeitabständen angeordnet. Ein solcher Zeitabschnitt 18.1 bis 18.4 kann z.B. durch die Nachtstunden verschiedener Tage definiert sein. Das System macht für jeden Zeitabschnitt 18.1 bis 18.4 eine statistische Auswertung der Datensätze. Der erfindungsgemässe statistische Vergleich wird in Abhängigkeit davon ausgeführt, ob der momentane Zeitpunkt t0 innerhalb oder ausserhalb eines der vordefinierten Zeitabschnitte liegt. Liegt t0 innerhalb eines Zeitabschnittes (wie in Fig. 3 gezeigt), dann wird der aktuelle Datensatz nur mit derjenigen Statistik verglichen, die sich aus den Datensätzen der entsprechenden vorangegangenen Zeitabschnitte 18.2 bis 18.4 ergibt. Liegt t0 dagegen ausserhalb eines solchen Zeitabschnittes, dann wird die Statistik auf der Basis derjenigen Datensätze ermittelt, welche in der Vergangenheit jeweils ausserhalb der Zeitabschnitte 18.1 bis 18.4 lagen.

Der Zweck einer solchen statistischen Auswertung ist am einfachsten an einem konkreten Beispiel zu erläutern. Während des Tages ist es nicht ungewöhnlich, dass sich eine Person auf den Weg 2 auf das Haus 1 zu bewegt. Anders ist dies jedoch bei Nacht. Indem nun die zu Tageszeiten erfassten Datensätze von den übrigen getrennt statistisch ausgewertet werden, können Sicherheit und Zuverlässigkeit des Systems erhöht werden.

Die Zeitbezüge der Datensätze, welche der statistischen Analyse zugrundegelegt werden, können direkt oder indirekt vorgegeben bzw. festgelegt sein. Im einen Fall wird im voraus definiert, welchen zeitlichen Intervallen der Zeitvermerk eines Datensatzes angehören muss (z.B. "Nachtstunden", "Samstag", "Feiertag"), damit der entsprechende Datensatz für die Statistik berücksichtigt wird. Im anderen Fall sind z.B. andere Parameter für die Relevanz zu prüfen (z.B. die Helligkeit, die Temperatur, eine bestimmte Geschwindigkeit eines identifizierten Objektes). Werden die Datensätze in einer Datenbank gespeichert, dann kann im Prinzip nach jedem Element des Datensatzes sortiert werden.

Das System kann auch gewisse Kriterien anhand der bereits aufgetretenen Alarmsituationen bzw. Fehlalarme im Laufe der Zeit erstellen. Namentlich kann die Abfolge von zwei oder mehr Ereignissen als Kriterium für die Relevanz verwendet werden. Beispielsweise kann sich mit der Zeit herauskristallisieren, dass die Abfolge von zwei bestimmten Ereignissen A, B unkritisch ist, solange nicht das Ereignis C folgt. Eine solche Konzeption des Verfahrens ist insbesondere dann von Vorteil, wenn eine Mehrzahl von Videokameras (bzw. zusätzlichen Sensoren) zur Überwachung eines grösseren Geländes bzw. Gebäudes zum Einsatz kommt.

Folgendes Beispiel soll dies erläutern: Ein Lieferant wird im Normalfall immer bei einem bestimmten Eingang vorfahren, seine Waren ausladen und diese an einer bestimmten Stelle des Lagers deponieren. Eine erste Kamera des Überwachungssystems wird den vorfahrenden Lieferantenwagen erkennen, eine zweite das Eintreten des Lieferanten in das Lager. Danach wird das Verlassen des Lagers und das Wegfahren des Lieferantenwagens erkannt. Diese Abfolge von Ereignissen soll nicht zu einem Alarm führen. Geht der Lieferant nun aber zuerst an einen anderen Ort und nicht direkt in das Lager, dann ist dies eine ausserordentliche Situation. Ebenfalls ist es ausserordentlich, wenn der Lieferant zwar in das Lager geht, wenn er dieses aber nicht innerhalb einer bestimmten Zeit wieder verlässt (sei es um weitere Waren zu holen oder um das Gelände zu verlassen).

Die erfindungsgemässe statistische Auswertung kann an der vereinfachten grafischen Darstellung der Fig. 4 verdeutlicht werden. Auf der Abszisse X ist z.B. der Mittelwert der in einem bestimmten Segment vorhandenen Graustufen-Werte aufgetragen und auf der Ordinate Y der Abstand des Schwerpunktes der Graustufen des Segmentes vom fest vorgegebenen Zentrum des Segments. Jedes Kreuz in Fig. 4 markiert einen Datensatz. Im Normalfall werden sich die Datensätze in einem gewissen Bereich 19 sammeln. (Selbstverständlich werden die Datensätze nicht alle ganz genau gleich sein, da sich z.B. die Lichtverhältnisse und das Wetter im Verlauf der Zeit ändern können.)

In Fig. 4 sind beispielhaft vier Datensätze 20, 21, 22, 23 ausserhalb des Bereiches 19 dargestellt. Das System erkennt aufgrund des statistischen Vergleichs, dass diese Datensätze aussergewöhnliche Situationen kennzeichnen können. Bei jedem dieser Datensätze 20 bis 23 hat das System also einen Alarm ausgelöst. Der Bewacher hat in allen vier Fällen die Situation überprüft und festgestellt, dass z.B. nur die Datensätze 20 und 21 tatsächlich Alarmsituationen identifiziert haben. D.h. die beiden anderen Datensätze 22 und 23 waren Fehlalarme. Diese Beurteilung wird im System abgespeichert und bei der nächsten ausserordentlichen Situation berücksichtigt. Auf diese Weise lernt das System mit der Zeit dazu.

Die Darstellung in Fig. 4 ist aus Gründen der Klarheit nur zweidimensional. In der Praxis kann ein Datensatz n Elemente enthalten, so dass die statistische Auswertung in n Dimensionen erfolgt.

Es ist auch zu beachten, dass sich der Bereich 19 im Verlauf der Zeit entsprechend den Umgebungsbedingungen ändern kann. D.h. dass sich das System an die Realität anpassen kann. Diese Anpassung erfolgt automatisch, da ständig neue und aktuelle Datensätze abgespeichert werden.

Die Stabilität des Systems und die Anpassungsfähigkeit können durch die Wahl geeigneter statistischer Auswerteverfahren beeinflußt bzw. kontrolliert werden. Beispielsweise können aktuelle Datensätze stärker gewichtet werden als alte. Mit dieser Massnahme kann die Anpassung beschleunigt werden. Umgekehrt kann sie durch eine schwache Gewichtung der jungen Datensätze verzögert werden (was zu einer höheren Stabilität führt).

Aus Kostengründen werden Vorortzüge und Untergrundbahnen weitgehend ohne Zugbegleitpersonal geführt. Dies bringt namentlich in den Randzeiten ein Sicherheitsdefizit mit sich. Hier kann mit der Erfindung Abhilfe geschaffen werden. Zu diesem Zweck werden beispielsweise in jedem Wagen mindestens eine Videokamera und ein Mikrofon installiert. (Die Anzahl der Mikrofone kann ohne weiteres grösser oder kleiner sein als diejenige der Videokameras. Um Schläge - z.B. aufgrund von Vandalenakten - feststellen zu können, können auch Körperschallmikrofone eingesetzt werden.) Die Bilder und die Tonsignale können z.B. in jedem Wagen mit in den Geräten integrierten Prozessoren aufbereitet werden (zur Ermittlung der charakteristischen Datensätze).

Mit Hilfe von Wegsensoren und unter Einbezug von Geschwindigkeit des Zuges, Tageszeit, Streckenabschnitt wird es möglich, von den jeweiligen Umgebungsbedingungen abhängige Statistiken zu erstellen und gefährliche Situationen von ungefährlichen besser zu unterscheiden. (Umgebungsbedingungen sind z.B. Geräuschpegel des momentanen Streckenabschnittes bzw. der Fahrgeschwindigkeit, Fahrgastfrequenzen etc.) Gewisse Informationen (Geschwindigkeit, Streckenabschnitt, Zeit etc.) können vom Zugleitsystem geliefert werden.

Vorzugsweise werden alle Detektionsgeräte verknüpft, so dass die Daten aus verschiedenen Wagen zueinander in Beziehung gesetzt werden können. Wird von der zentralen Verarbeitungsstation im Zug eine außergewöhnliche Situation festgestellt, kann eine Zentrale des Bahnnetzwerkes via Zugfunk alarmiert werden. Dabei werden vorzugsweise die relevanten Bilder und evtl. Tonsignale mitgeliefert. Das Überwachungspersonal kann dann wie bereits weiter oben beschrieben eine Beurteilung der Situation durchführen.

Dadurch dass nur in ganz bestimmten Situationen Bilder an eine bewachte Zentrale übertragen werden müssen, kann mit relativ beschränkten Funkübertragungskapazitäten gearbeitet werden, ohne dass auf eine Dauerüberwachung verzichtet werden müsste.

Die konkreten Beispiele und Ausführungsformen können in vielfältiger Weise abgewandelt werden, ohne dass der Rahmen der Erfindung gesprengt wird. Die Datensätze können auch mit physikalischen Meßdaten von Sensoren ergänzt werden. Insbesondere können Gassensoren (Rauchmelder), Lichtschranken, Bewegungsdetektoren etc. an geeigneten Stellen plaziert werden. Beim Einsatz von mehreren synchronisierten Videokameras können die charakteristischen Daten der Videobilder mit demselben Zeitvermerk in einem gemeinsamen Datensatz erfasst werden. Die Videokameras können je nach Anwendung statt im sichtbaren auch im unsichtbaren (z.B. infraroten) Spektralbereich empfindlich sein. Im System können auch beliebige Sensoren integriert werden (Drucksensoren, Mikrofone, Feuchtigkeitssensoren etc.).

Das erfindungsgemässe Verfahren kann mit an sich bekannten Mitteln verwirklicht werden. Neu ist in erster Linie die Verarbeitung der echtzeitmässig erfassten Daten und die entsprechende Ansteuerung der Systemkomponenten bzw. Alarmsignalisierung. Selbstverständlich muss sich die Aktion, welche beim Erkennen einer ausserordentlichen Situation ausgelöst wird, nicht im Aufschalten eines Videosignals auf einen Überwachungsmonitor erschöpfen. Es können z.B. auch automatisch Türen verriegelt, Scheinwerfer oder Sirenen eingeschaltet werden.

Zusammenfassend ist festzustellen, dass durch die Erfindung eine automatisierte bzw. für den Bewacher erleichterte Überwachung von komplexen Situationen ermöglicht wird.

## Patentansprüche

1. Verfahren zum Überwachen eines vorgegebenen Überwachungsbereiches mit Hilfe einer Videokamera (6), wobei aus einem von der Videokamera aufgenommenen Videobild im Rahmen einer Bildanalyse ein charakteristischer Datensatz ermittelt wird, **dadurch gekennzeichnet, dass**
a) die Datensätze einer Vielzahl von Videobildern abgespeichert werden, dass
b) aufgrund vorgegebener Kriterien aus den abgespeicherten Datensätzen eine Mehrzahl von Datensätzen ausgewählt wird, dass
c) aus dieser Mehrzahl von Datensätzen für mindestens eine normale Situation ein zulässiger Wertebereich für mindestens einen charakteristischen Wert bestimmt wird, und dass
d) ein Alarm ausgelöst wird, wenn mindestens ein Wert des momentanen Datensatzes die Grenze des zulässigen Wertebereichs einer normalen Situation überschreitet.

2. Verfahren nach Anspruch 1, **dadurch gekennzeichnet, dass** im Rahmen der Bildanalyse ein Videobild in mehrere Segmente (17.1 bis 17.6) zerlegt wird und dass für jedes Segment (17.1 bis 17.6) charakteristische Daten für den Datensatz ermittelt werden.

3. Verfahren nach Anspruch 1 oder 2, **dadurch gekennzeichnet, dass** im Rahmen der Bildanalyse die Graustufen der Bildpunkte statistisch ausgewertet werden.

4. Verfahren nach einem der Ansprüche 1 bis 3, **dadurch gekennzeichnet, dass** im Rahmen der Bildanalyse Linien bzw. Kanten ermittelt werden.

5. Verfahren nach einem der Ansprüche 1 bis 4, **dadurch gekennzeichnet, dass** zumindest einige der charakteristischen Daten durch Vergleich des momentanen Videobildes mit mindestens einem zeitlich vorangehenden Videobild ermittelt werden.

6. Verfahren nach Anspruch 5, **dadurch gekennzeichnet, dass** durch den Vergleich Richtung und/oder Geschwindigkeit eines Objektes ermittelt und im Datensatz zum momentanen Videobild abgespeichert werden.

7. Verfahren nach einem der Ansprüche 1 bis 6, **dadurch gekennzeichnet, dass** der statistische Vergleich auf einem oder mehreren selektiv ausgewählten Zeitabschnitten (18.1 bis 18.4) basiert.

8. Verfahren nach einem der Ansprüche 1 bis 7, **dadurch gekennzeichnet, dass** die Videobilder in einem FIFO-Speicher zwischengespeichert werden und dass eine von einer Überwachungsperson durchgeführte Situationsbeurteilung zur automatischen Auswertung späterer Situationen abgespeichert bzw. verwendet wird.

9. Verfahren nach einem der Ansprüche 1 bis 8, **dadurch gekennzeichnet, dass** in einer Anlaufszeit ein systematisches Training anhand von Testsituationen durchgeführt wird.

10. Verfahren nach einem der Ansprüche 1 bis 9, **dadurch gekennzeichnet, dass** zur Überwachung zusätzlich ein Mikrofon verwendet wird, dass ein vom Mikrofon erfasstes akustisches Signal in verschiedene Signalabschnitte aufgeteilt wird, dass zumindest ein Signalabschnitt einer Spektralanalyse unterworfen wird und dass daraus charakteristische Daten extrahiert werden.

11. Anwendung des Verfahrens nach einem der Ansprüche 1 bis 10 zur Überwachung eines dem Publikum zugänglichen Bereichs, insbesondere eines Fahrgastraumes eines Transportmittels.

## Claims

1. Method for monitoring a predetermined surveillance region by means of a video camera (6), a characteristic set of data being established from a video image, which is recorded by the video camera, within the scope of an image analysis, **characterised in that**
a) the sets of data of a plurality of video images are stored,
b) a multiplicity of sets of data is selected from the stored sets of data on the basis of predetermined criteria,
c) an admissible range of values for at least one characteristic value is established from that multiplicity of sets of data for at least one normal situation, and
d) an alarm is triggered if at least one value of the current set of data exceeds the limit of the admissible range of values of a normal situation.

2. Method according to claim 1, **characterised in that** a video image is separated into several segments (17.1 to 17.6) within the scope of the image analysis and **in that** characteristic data for the set of data are established for each segment (17.1 to 17.6).

3. Method according to claim 1 or 2, **characterised in that** the grey levels of the pixels are statistically evaluated within the scope of the image analysis.

4. Method according to any one of claims 1 to 3, **characterised in that** lines or edges are established within the scope of the image analysis.

5. Method according to any one of claims 1 to 4, **characterised in that** at least some of the characteristic data are established by comparison of the current video image with at least one chronologically preceding video image.

6. Method according to claim 5, **characterised in that** the direction and/or speed of an object is/are established by the comparison and is/are stored in the set of data for the current video image.

7. Method according to any one of claims 1 to 6, **characterised in that** the statistical comparison is based on one or more selectively chosen time intervals (18.1 to 18.4).

8. Method according to any one of claims 1 to 7, **characterised in that** the video images are intermediately stored in a FIFO memory and **in that** a situation assessment, which is effected by a supervising person, is stored or used for the automatic assessment of subsequent situations.

9. Method according to any one of claims 1 to 8, **characterised in that** systematic training is effected by means of test situations during an introductory period.

10. Method according to any one of claims 1 to 9, **characterised in that** a microphone is used in addition for the monitoring, **in that** an audio signal which is detected by the microphone is separated into various signal portions, **in that** at least one signal portion is subjected to spectral analysis and **in that** characteristic data are extracted therefrom.

11. Application of the method according to any one of claims 1 to 10 for monitoring a region which is accessible to the public, in particular a passenger compartment of a means of transport.

## Revendications

1. Procédé pour la surveillance d'une zone de surveillance prédéterminée à l'aide d'une caméra vidéo (6), moyennant quoi à partir d'une image vidéo prise par la caméra vidéo, on détermine une série de données ou article caractéristique dans le cadre d'une analyse d'image, **caractérisé en ce que**
a) on conserve en mémoire la série de données ou article d'une pluralité d'images vidéo, **en ce que**
b) sur la base de critères préétablis, on choisit à partir des articles mémorisés une pluralité d'articles, **en ce que**
c) à partir de cette pluralité d'articles on détermine pour au moins une situation normale une plage de valeurs admises pour au moins une valeur caractéristique, et **en ce que**
d) une alarme est déclenchée lorsqu'au moins une valeur de l'article momentané dépasse la limite de la plage de valeurs admises d'une situation normale.

2. Procédé selon la revendication 1, **caractérisé en ce que** dans le cadre de l'analyse d'image, on décompose une image vidéo en plusieurs segments (17.1 à 17.6) et **en ce que** pour chaque segment (17.1 à 17.6), on détermine les données caractéristiques pour l'article.

3. Procédé selon la revendication 1 ou 2, **caractérisé en ce que** dans le cadre de l'analyse d'image, on évalue statistiquement les échelles de gris des points d'image.

4. Procédé selon les revendications 1 à 3, **caractérisé en ce que** dans le cadre de l'analyse d'image, on détermine les lignes ou bords.

5. Procédé selon l'une des revendications 1 à 4, **caractérisé en ce que** l'on détermine au moins certaines des données caractéristiques en comparant l'image vidéo momentanée avec au moins une image vidéo précédente dans le temps.

6. Procédé selon la revendication 5, **caractérisé en ce que** par la comparaison, on détermine la direction et/ou vitesse d'un objet et on les met en mémoire dans l'article pour l'image vidéo momentanée.

7. Procédé selon l'une des revendications 1 à 6, **caractérisé en ce que** la comparaison statistique est basée sur une ou plusieurs sections de temps (18.1 à 18.4) choisies sélectivement.

8. Procédé selon l'une des revendications 1 à 7, **caractérisé en ce que** les images vidéo sont stockées temporairement dans une mémoire FIFO et **en ce que** l'on met en mémoire ou utilise une appréciation de situation effectuée par une personne en charge de la surveillance pour l'évaluation automatique des situations ultérieures.

9. Procédé selon l'une des revendications 1 à 8, **caractérisé en ce que** l'on effectue dans un temps de démarrage un training systématique sur la base des situations de test.

10. Procédé selon l'une des revendications 1 à 9, **caractérisé en ce que** pour la surveillance on utilise de plus un microphone et **en ce qu'**un signal acoustique saisi par le microphone est réparti en différentes sections de signaux, **en ce que** une section de signal est soumise à une analyse de spectre et **en ce que** l'on en extrait les données caractéristiques.

11. Application du procédé selon l'une des revendications 1 à 10 pour la surveillance d'une zone accessible au publique, en particulier un espace voyageurs d'un moyen de transport.
